# DEMANDE DE BREVET EUROPEEN

(11) **EP 1 243 954 A2**
(43) Date de publication de la demande: **25.09.2002**
(21) Numéro de dépôt: 02100056.7
(22) Date de dépôt: 24.01.2002
(51) Int. Cl.: G02B 6/38

(54) **Système de connecteurs optiques à montage aisé**

(30) Priorité: 25.01.2001 FR 0101036
(71) Demandeur: FCI, 75311 Paris Cedex 9 (FR)
(72) Inventeur: LECOMTE, Fabrice, 72220, SAINT-MARS D'OUTILLER (FR); BADEAU, Jean Max, 72450, MONTFORT LE GESNOIS (FR); PIGNOT, Patrick, 72450, LE MANS (FR)
(74) Mandataire: Schmit, Christian Norbert Marie

(57) **Abrégé**

Connecteur optique (1) comportant un boîtier (3) et un canal (4) dans ce boîtier pour y recevoir un câble optique (2). Ce câble optique est préférentiellement monté dans un contact optique (41) comportant plusieurs parties, dont une partie avant constituée d'une férule (8) de connexion et d'un manchon (31) permettant d empêcher la rotation de la fibre optique à I intérieur du canal. La rétention du contact optique à I intérieur du canal 4 est assurée par un support d'accrochage présentant par exemple une baïonnette (14) montée autour de la fibre optique, celle ci coopérant avec un renfoncement (16) d'une paroi intérieure du canal. Un ressort (32) est disposé autour de la fibre optique pour assurer le maintien de la baïonnette dans un retour (22) du renfoncement.

## Description

La présente invention a pour objet un système de connecteurs optiques, c'est à dire un système de connecteurs utilisés pour relier entre eux des tronçons de fibres optiques. Le but de l'invention est de permettre un montage et un démontage aisé des connecteurs optiques contenus dans un tel système, tout en garantissant un montage aisé des contacts optiques eux mêmes aux extrémités des câbles, les contacts optiques étant ensuite insérés dans ces connecteurs optiques.

Notamment, on connaît dans I état de la technique un contact optique monté à une extrémité d'un câble et comportant, sur un pourtour extérieur, au moins une languette élastique. Dans un mode de réalisation préféré, le contact comporte plusieurs languettes disposées régulièrement et symétriquement par rapport à un axe de symétrie du câble. Ces languettes élastiques, appelées "clips", dépassent légèrement du pourtour extérieur du contact et peuvent être rabattues contre ce pourtour lorsque la fibre optique est insérée dans un canal d'un connecteur complémentaire. Lors de I insertion du contact dans le canal, les languettes sont préalablement contraintes contre le pourtour extérieur de le contact. Puis lorsque I enfoncement du contact est optimal, par exemple lorsqu'il vient en butée contre un rebord intérieur du canal, alors le canal est prévu de telle sorte qu il présente un décrochement de diamètre plus important dans lequel les languettes élastiques peuvent librement se relâcher. Une fois les languettes élastiques relâchées, celles ci viennent en appui contre une collerette formée par ce décrochement. La coopération des languettes élastiques relâchées et de la collerette empêche ainsi la sortie de la fibre optique du canal.

Dans l'état de la technique, pour permettre la sortie de la fibre optique de ce canal, il est nécessaire d'utiliser un outil spécifique. En effet, I outil utilisé permet de rabattre les languettes relâchées, en étant inséré depuis une face de connexion du connecteur, alors que le contact est inséré depuis une face arrière. L outil utilisé correspond par exemple à un cylindre creux à coulisser le long du contact dans le canal, de manière à venir contraindre les languettes élastiques le long du pourtour extérieur du contact. Une fois ces languettes élastiques rabattues le long du corps, on peut en effectuant une traction sur la fibre optique dépassant du côté de la face arrière du connecteur assurer le retrait de ce contact.

Cette solution pose un problème. L utilisation d un outil pour permettre la sortie de la fibre optique du connecteur peut être dangereuse. En effet, I outil risque d endommager I extrémité de connexion du contact lors de son insertion du côté de la face avant de déconnexion. De plus cette solution est également encombrante et nécessite notamment la déconnexion obligatoire et totale du connecteur de son connecteur complémentaire, car l'outil de déconnexion est inséré depuis cette face avant de connexion du connecteur.

Dans l'état de la technique, on connaît de l'enseignement du document EP A 0 366 346, un ensemble connecteur comportant un contact optique monté à une extrémité d'un câble et un connecteur complémentaire pour recevoir ce câble. Le contact optique est inséré depuis une face arrière dans le connecteur. Il comporte une férule et un manchon monté autour de la férule pour associer cette férule à l'extrémité du câble. Les férules assurent essentiellement une fonction mécanique de préhension de I extrémité fragile constituée par la fibre optique contenue dans le câble. Par ailleurs le contact optique comporte autour du câble une partie arrière constituée par un prolongement du manchon.

Un moyen de fixation présentant une languette élastique est monté autour de cette partie arrière, la partie arrière représentant un tronçon du manchon d'un diamètre moindre. Selon ce document le connecteur complémentaire présente une fente sur son pourtour extérieur duquel dépasse la languette élastique lorsqu'elle y est insérée. Il n'est donc plus nécessaire de déconnecter le connecteur de son connecteur complémentaire pour retirer un contact optique. Mais par contre cette solution pose des problèmes d'étanchéité au niveau du canal dans lequel est placé le contact

Globalement, cette solution de l'état de la technique pose un premier problème car elle nécessite toujours impérativement un outillage spécialisé pour pouvoir désengager un tel contact optique d'un canal du connecteur dans lequel il est inséré. En effet, la languette élastique vient coopérer avec une gorge du canal dont elle ne peut ressortir sans l'exercice d'une pression sur des bords de cette languette dépassant d'un côté ou d'un autre de la fente.

La solution décrite ci dessus pose un deuxième problème du fait que le moyen d'accrochage est une petite pièce montée sur le manchon, cette pièce est nécessairement retenue en translation pour éviter de la perdre, ou de l'endommager au cours des manipulations. Or comme le manchon est solidaire sur toute sa longueur avec le câble optique qu'il entoure, la mobilité de cette pièce est limitée. Ceci oblige à devoir prévoir soit des manchons très long difficiles à monter, soit des manipulations dans l'espace très limité juste au niveau du connecteur.

Enfin, cette solution pose un troisième problème, car pour pourvoir correctement engager la languette élastique dans la gorge d'un canal du connecteur complémentaire, il est nécessaire de les présenter en vis à vis l'un de l'autre. Pour cela, le moyen de fixation présente sur un pourtour extérieur une bande longitudinale en surépaisseur pour coopérer et ainsi orienter le moyen de fixation dans le canal. En effet, cette bande doit venir s'insérer dans une fente prévue dans le pourtour du canal. L'engagement de cette bande dans la fente nécessite un mouvement de rotation pour être correctement présenté, or si cette manipulation doit être effectuée au moyen d'un outillage, pas plus que dans les autres solution de la technique l'enseignement de ce document ne permet de résoudre le problème de facilité de montage d'un contact optique dans son connecteur complémentaire.

Dans l'état de la technique, on connaît des moyen de fixation pouvant être utilisé manuellement et ne nécessitant pas l'utilisation d'outillage spécialisé ni pour le montage, ni pour le démontage, par exemple, un dispositif à baïonnette comme décrit dans le document US A 4,738,508. Selon ce document, la baïonnette est conçue de telle sorte que le contact optique présenté à une extrémité du câble optique présente un manchon muni d'une ouverture, l'ouverture étant prévue pour recevoir un premier pignon présenté à la périphérie d'une paroi extérieure d'un connecteur complémentaire du contact. Mais cette solution pose un problème car pour garantir le maintien du contact dans le connecteur, le contact comporte de plus un deuxième picot interne s'étendant radialement par rapport à la fibre optique et devant coopérer avec une fente réalisée dans la paroi intérieure du connecteur complémentaire. En effet, cet ensemble nécessite une manutention trop minutieuse des contacts et connecteurs complémentaires.

Enfin malgré toutes les précautions prises, il apparaît qu'au bout d'un certain temps d'utilisation, un tel connecteur optique est le siège de pertes de transmission. Il est donc nécessaire de changer, ou de nettoyer les fibres optiques. Le nettoyage est délicat étant donné la profondeur d'enfoncement des extrémités des fibres optiques, notamment au sein des prises femelles. Le retrait aisé de la fibre optique de son connecteur permet un nettoyage plus aisé et surtout un nettoyage individuel en fonction des besoins identifiés sans nécessité un démontage intégral de tous les contacts optiques.

Le but de I invention est de remédier à ces problèmes en proposant un contact optique tel qu'un câble optique peut y être facilement monté et démonté, et d'autre part que ce contact optique soit lui même facilement montable et démontable dans un connecteur dans lequel il peut être présenté. La solution de l'invention permet un montage et un démontage manuel. En effet dans l'invention on prévoit notamment que la partie arrière présentant le moyen d'accrochage soit préhensible et coulissante le long du câble optique. En coulissant la partie arrière peut être rapprocher de l'extrémité du câble au niveau de laquelle la férule et le manchon sont monté. Ce rapprochement permet également d'introduire cette partie arrière dans le canal du connecteur qui reçoit déjà la férule, le manchon, et le câble. Cette partie arrière coopère ensuite par rotation avec un relief complémentaire prévu sur une paroi intérieure du canal pour assurer la rétention global du contact dans le connecteur.

Un autre avantage de l'invention est qu'elle permet de tolérer des variations liées à la dilatations des matériaux notamment lorsqu'ils sont placés dans des conditions climatiques difficiles, du fait que la partie arrière ne soit pas collée directement sur le câble, mais bien coulissante.

Dans un mode préféré de réalisation, pour garantir l'étanchéité au niveau de cette partie arrière coulissante, celle ci comporte au moins deux joints: un interne entre une paroi intérieure et le câble, et un externe entre une paroi extérieure et une paroi intérieure du canal du connecteur dans lequel est monté le contact. Ces joints étant de préférence toriques, ils ne gênent pas la mobilité de la partie arrière le long du câble.

L'invention a donc pour objet un contact optique monté autour d'un câble optique, le contact optique comportant une férule montée à une extrémité du câble, un manchon retenant solidairement le câble et la férule, et un support d'accrochage monté autour du câble et prévu pour coopérer avec un connecteur complémentaire pour y retenir le contact optique dans un canal du connecteur complémentaire, caractérisé en ce que le support d'accrochage est monté sur une partie arrière du contact et cette partie arrière coulisse le long du câble, le support d'accrochage pouvant être engagé par rotation dans une paroi intérieure du canal.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
Figure 1 : une vue en coupe longitudinale d un premier mode de réalisation d'un contact optique selon l'invention ;
Figure 2: une vue en coupe longitudinale d'un connecteur complémentaire d'un contact optique selon l'invention;
Figure 3 : un vue partiellement découpée d un tronçon du connecteur recevant le contact selon I invention ;
Figure 4 : une vue extérieure d un support d'accrochage d'un contact optique selon I invention;
Figure 5 : une vue extérieure d un manchon d'un contact optique selon I invention;
Figure 6 : une vue en coupe longitudinale d'un deuxième mode de réalisation d'un contact optique selon l'invention.

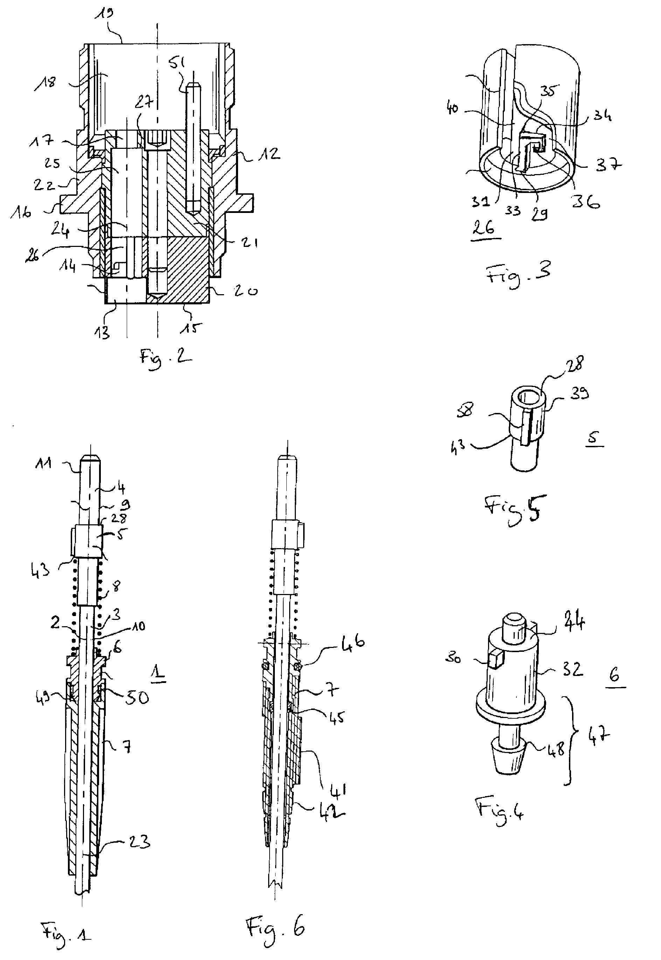

La figure 1 montre un contact optique 1 monté autour d'une fibre optique 2, la fibre optique 2 étant protégée par un câble protecteur 3. Dans une première solution, la fibre optique coulisse librement à l'intérieur du câble 3, on parle alors de câble à structure libre. Dans une deuxième solution, la fibre optique 2 est totalement maintenue par le câble 3, on parle alors de câble à structure serrée, ce type de câble étant notamment adapté à une utilisation dans le domaine aéronautique. Dans cette deuxième solution de l'invention, un déplacement exercé sur le câble 3 entraîne obligatoirement un même déplacement de la fibre 2, et inversement.

Le contact optique 1 comporte une férule ou embout 4, un manchon ou support d'embout 5, et un moyen d'accrochage 6 présenté sur une partie arrière 7 du contact optique. De préférence, le contact optique 1 comporte un ressort 8 également monté autour du câble 3 entre le manchon 5 et la partie arrière 7.

Le câble 3 et la férule 4 sont retenus dans le manchon qui est retenu à la fois sur un pourtour extérieur 9 de la férule 4 et à la fois sur un pourtour extérieur 10 du câble. Le manchon 5 est retenu au niveau d'une extrémité du câble 3. Le manchon 5 est de préférence cylindrique. Le câble optique 3 est solidaire de la férule 4 et du manchon 5, en étant retenu par ce manchon cylindrique 5. Par exemple le manchon cylindrique 5 est serti sur le câble 3. La férule 4 est préférentiellement réalisée en céramique. Elle est emmanchée en force dans le manchon cylindrique 5. La férule 4 et le manchon cylindrique 5 peuvent également être en métal, et ne former qu'une seule pièce monobloc montée à l'extrémité du câble 3 de la même manière.

Le câble 3 est aligné avec la férule 4 de telle sorte que la fibre optique 2 est alignée dans la férule 4. La férule 4 forme une extrémité de connexion 11 du contact optique 1.

Le support d'accrochage 6 est généralement de petite taille. Il est préférentiellement associé à la partie arrière 7 dont il est solidaire pour être plus facilement monté au niveau d'un connecteur complémentaire 12 présenté figure 2. La partie arrière 7 et le support d'accrochage 6 sont coulissant le long du câble 3, ils sont indépendant de la férule 4 et du manchon 5.

La partie arrière 7 est disposée autour du câble optique 3 et a une forme allongée le long de ce câble. La partie arrière 7 est préférentiellement souple et réalisée en élastomère. Cette partie arrière 7 forme une "tétine".

Ainsi, toute force ou mouvement longitudinal ou de rotation exercé sur la partie arrière 7 est transformé en une action identique appliquée au support d'accrochage 6. La partie arrière 7 étant longue, elle permet une manipulation aisée du support d'accrochage 6.

De plus, la partie arrière 7 sert de gaine supplémentaire au câble optique 3 notamment au niveau d'une ouverture 13 de laquelle sort le contact 1 lorsqu'il est inséré dans le connecteur complémentaire 12. Ainsi, on ne risque pas de plier la fibre optique 2 au niveau de l'ouverture 13 et de lui faire subir un angle de 90° qui pourrait éventuellement être nuisible. La partie arrière 7 soutient mécaniquement au moins une portion du câble optique sortant d'un canal 14 formé dans le connecteur 12 et débouchant au niveau d'une face arrière 15, et protège ainsi la fibre optique 2 de courbures trop fortes. La partie arrière 7 forme un fourreau autour du câble 3 dont la rigidité décroît dans une extrémité arrière pour rendre ainsi progressivement sa souplesse au câble.

La figure 2 montre le connecteur complémentaire 12 prévu pour recevoir le contact optique 1 dans son canal 14. Le connecteur complémentaire 12 comporte un boîtier 16 dans lequel est formé le canal 14. Le canal 14 est prévu pour recevoir le contact optique 1 monté sur le câble optique 3. Notamment le canal 14 comporte l'ouverture 13 au niveau de la face arrière 15 du boîtier 16. Préférentiellement le contact optique 1 est inséré dans I ouverture 13 depuis cette face arrière 15. Par ailleurs, le canal 14 comporte un orifice de sortie 17 permettant de laisser dépasser l'extrémité de connexion 11, cette extrémité de connexion 11 dépassant au moins à I intérieur d un réceptacle 18 formé au niveau d une face avant 19 du connecteur complémentaire 12. La face avant 19 est opposée à la face arrière 15.

Un contact optique complémentaire tel que 1 peut être connecté avec I extrémité de connexion 11 s il est présenté en vis à vis de la face avant 19, et inséré dans le réceptacle 18, de manière à se positionner en vis à vis de l'extrémité de connexion 11.

Dans une variante, le connecteur complémentaire 12 peut recevoir plusieurs contacts optiques telles que 1. Dans ce cas, chacune des extrémités de connexion telles que 11 de ces contacts optiques montés dans le connecteur 12 sont présentées dans le réceptacle 18. Dans un mode de réalisation préféré, le boîtier 16 comporte plusieurs unités assemblées.

Dans I exemple présenté figure 2, le boîtier 16 comporte une portion arrière 20, une portion avant 21 et une portion extérieure 22. La portion extérieure 22 permet I association des portions arrière 20 et avant 21. De plus, la portion extérieure 22 présente des bordures au niveau de la face avant 19 pour permettre de former le réceptacle 18. Par ailleurs, la portion extérieure 22 comporte un pourtour extérieur permettant au connecteur complémentaire 12 d être correctement connecté avec un dispositif complémentaire, ce dispositif complémentaire pouvant comporter des contacts optiques eux mêmes complémentaires des contacts optiques tels que 1.

Le connecteur complémentaire 12 peut indifféremment être un connecteur mâle, au bien un connecteur femelle, selon la forme proposée par le boîtier 16.

La fibre optique 2 ainsi que le contact optique 1 comportent un axe d allongement identique 23. Le canal 14 prévu pour recevoir la fibre optique 2 a préférentiellement une forme globalement cylindrique, et comporte un axe central 24. Pour assurer une insertion correcte du contact optique 1 dans le canal 14, il est nécessaire que I axe d allongement 23 soit aligné avec I axe central 24, lors de la présentation du contact optique 1 en face de l'ouverture 13.

La férule 4 a préférentiellement une forme cylindrique. Le canal 14 présente un diamètre intérieur juste suffisant pour recevoir un diamètre extérieur du cylindre formé par la férule 4. Ainsi la férule 4 ne flotte pas dans le canal 14. La portion de canal avant 25 traversant la portion avant 24 présente un diamètre intérieur légèrement supérieur à celui présenté par la portion de canal arrière 26 traversant la portion arrière 23. Néanmoins, cette portion de canal avant 25 présente au niveau de I orifice de sortie 17, un diamètre intérieur légèrement inférieur. Ainsi, le canal 14 présente des rebords intérieurs 27 pour limiter I enfoncement du contact optique 1 à I intérieur du canal 14. En effet, un chant 28 du manchon cylindrique 5 est prévu pour venir en butée contre le rebord 27.

La rétention du contact optique 1 dans le connecteur complémentaire 12 est assurée par le support d'accrochage 6. Il est à noter que seul le support d'accrochage 6 et par conséquent la partie arrière 7 peuvent tourner autour de l'axe 23 et du câble 3, pour permettre justement au support d'accrochage 6 d'être correctement engagé dans un relief complémentaire 29 du canal 14.

Figure 4, dans un premier mode de réalisation, le support d'accrochage 6 présente au moins un décrochement extérieur 30, pour former une baïonnette, prévu pour coopérer avec le relief complémentaire 29 prévu sur une paroi intérieure 31 du canal 14. Le décrochement 30 correspond par exemple à un ergot de forme parallelépipèdique ou cylindrique dressé perpendiculairement à une paroi extérieure 32 du support d'accrochage 6. Dans un mode de réalisation préféré, le relief complémentaire 29 est préférentiellement formé dans la portion de canal arrière 26.

Par exemple, le relief complémentaire 29 forme un renfoncement intérieur dans la paroi intérieure 31, par exemple une rampe dans laquelle le décrochement peut se déplacer. La rampe 29 est coudée. La rampe 29 comporte préférentiellement un premier tronçon 33 et un deuxième tronçon 34, le deuxième tronçon 34 étant séparé par un premier coude 35 du premier tronçon 33. Le renfoncement 29, soit le premier tronçon 33, présente une longueur selon I axe central 24 réduite afin de limiter I enfoncement de l'ergot 29 à I intérieur du canal 14. Le premier coude 35 est préférentiellement de l'ordre de 90°, et empêche un enfoncement longitudinal plus avant du support d'accrochage selon l'axe central 24.

De plus la rampe 29 comporte un retour 36 à une extrémité 37 du deuxième tronçon 34. Ce retour 36 est préférentiellement formé de manière à présenter un deuxième coude formant un angle aigu entre le deuxième tronçon 34 et ce retour 36, et permet ainsi de recevoir I ergot 30 dans une "impasse". La rampe 29 a préférentiellement une forme de J.

Dans le cas où le support d'accrochage comporte plusieurs décrochement, en correspondance la paroi intérieure comporte autant de rampe pour les recevoir respectivement.

Dans un mode de réalisation préféré, le support d'accrochage 6 comporte deux ergots tels que 30. Dans cet exemple, les ergots 30 sont diamétralement opposés. Ces deux ergots tels que 30 coopèrent alors avec respectivement deux renfoncements tels que 29 comportant chacun une rampe formée de telle sorte qu une même rotation appliquée au support d'accrochage 6 permet un enclenchement des deux ergots tels que 30 jusque dans les deux retours tels que 36. Une telle configuration permet d éviter la création d un angle entre I axe d allongement 23 et I axe central 24 lorsque le contact optique 1 est insérée dans le canal 14.

Lors du montage du contact optique 1 dans le connecteur complémentaire 12, on insère d'abord la férule 4 et conjointement le manchon cylindrique 5 dans le canal 14. Pour éviter une rotation de la férule 4 dans le canal 14 après mise ne place, et ainsi éviter des frottements qui pourraient avoir lieu entre l'extrémité de connexion 11 et un contact complémentaire, le manchon cylindrique 5 présente une clavette 38 sur un pourtour extérieur 39. Cette clavette 38, Figure 5, est prévue pour coopérer avec un rail de guidage 40 formé dans la paroi intérieure 31 du canal 14. La clavette 38 est formée parallèlement à I axe d allongement 23. Cette clavette 38 coopère avec la glissière 40 prévue dans les portions de canal 25 et 26 jusqu'au niveau de I orifice de sortie 17.

Dans une variante, on peut prévoir que la férule 4 présente une glissière telle que 40 pour coopérer avec une rainure complémentaire présentée en correspondance sur la paroi intérieure 31 du canal 14.

On enfonce le contact optique 1 dans le canal 14 jusqu'à ce que le chant avant 27 du manchon cylindrique 5 vienne en butée contre le rebord 26. Alors, le support d'accrochage 6 est lui même limité en translation dans le canal 14.

Au fur et à mesure de l'enfoncement du contact optique 1 selon l'axe central 24, le premier tronçon 33 de la rampe vient à recevoir I ergot 30. Au besoin, on effectue une rotation préalable du support d'accrochage 6 autour du câble 3 pour présenter l'ergot 30 en vis à vis du premier tronçon 33.

A cet effet, comme présenté Figure 6, une variante de réalisation d'un contact optique 1 présente un détrompeur 41 au niveau d'un pourtour extérieur 42 de la partie arrière 7. Ce détrompeur 41 permet lors d'une manipulation manuelle d'identifier la position relative de la partie arrière par rapport au câble 3. De préférence le support d'accrochage 6 présentant l'ergot 30 est monté de telle sorte sur la partie arrière 7, que le détrompeur 41 est dans un alignement de l'ergot 30 parallèlement à l'axe d'allongement 23 facilitant ainsi la manutention du contact 1

Puis, I ergot 30 vient en butée contre le premier coude 35, et pour engager l'ergot 30 dans le deuxième tronçon 34, on effectue une rotation de la partie arrière 7 présentant le support d'accrochage 6 autour de l'axe 23. Dans un mode de réalisation préféré, une largeur du deuxième tronçon 34 correspond à une rotation de I ordre de 60° du support d'accrochage 6 à l'intérieur du canal 14.

Lorsque l'ergot 30 vient en butée au niveau du deuxième angle aigu 37, on enfonce plus encore selon l'axe 24 le contact optique 1 dans le canal 14, et on effectue une rotation en sens inverse de la première rotation de manière à engager l'ergot 30 dans le retour 36.

Ainsi le mode de verrouillage de la fibre optique 2 dans le canal 14 permet de garantir une position de présentation connue et fixe de l'extrémité de connexion 11 dans le réceptacle 18, pour permettre une connexion optique de qualité avec un contact optique complémentaire.

Pour assurer la sortie de I ergot 30 de cette rampe il est nécessaire de parcourir le chemin inverse et d'effectuer des rotations inverses et des déplacements longitudinaux inverses par rapport à I axe 24, nécessaires pour permettre la sortie du contact optique 1.

Pour assurer le maintien de l'ergot 30 dans le retour 36, le contact 1 comporte le ressort 8 permettant de repousser activement le support d'accrochage 6 présentant cet ergot 30 en direction de la face arrière 15 du connecteur 12, depuis laquelle face le contact a été introduit.

Pour garantir que l'ergot 30 du support d'accrochage 6 reste bloqué dans le retour 36 de la rampe, le ressort 8 est comprimé entre le manchon cylindrique 5 et le support d'accrochage 6, soit entre le manchon cylindrique 5 et la partie arrière 7. Le ressort 8 est monté autour du câble 3. Le ressort 8 vient à une extrémité en appui contre un chant arrière 43 du manchon 5. Le chant arrière 43 est opposé au chant avant 28 présenté par ce même manchon 5. Par ailleurs, à une autre extrémité, le ressort 8 vient en appui contre une collerette 44 du support d'accrochage 6.

A l'intérieur du canal 14, le ressort 8 vient se comprimer entre le chant arrière 43 et la collerette 44. Le ressort 8 repousse donc le support d'accrochage 6 en direction de la face arrière 15, et ainsi dans le premier mode de réalisation assure le maintien de la position de l'ergot 30 dans le retour 36 de la rampe 29. De plus le ressort 8 assure un enfoncement maximum de l'extrémité de connexion 11 dans le canal 14 de manière à lui garantir une position certaine, en maintenant le chant avant 28 en butée contre les rebords intérieurs 26.

En effet, pour désengager I ergot 30 de ce retour 36 il faut comprimer plus encore le ressort 8 pour permettre un mouvement longitudinal selon I axe 24 du support d'accrochage 6 en direction de la face avant 19. Seulement ensuite, il est possible de faire effectuer une rotation de l'ergot 30 dans le deuxième tronçon 34. Quand l'ergot 30 est placé au niveau d u premier angle 35, le ressort 8 éjecte automatiquement la baïonnette 6 hors du renfoncement 29.

Figure 6, la partie arrière 7 comporte un premier joint 45 retenu dans une encoche formée dans une paroi intérieure de la partie arrière 7. Ce joint 45 est de préférence torique et vient au contact du pourtour extérieur 10 du câble 3 de manière hermétique. Ainsi, le joint intérieur 45 assure l'étanchéité de cette connexion.

De plus, lorsque le contact optique 1 est inséré dans le canal 14, la partie arrière 7 vient au contact de la paroi intérieure 31 au niveau de la portion de canal arrière 26. A ce niveau, la partie arrière 7 est entourée d'un deuxième joint externe 46 qui vient se comprimer entre le pourtour extérieur 42 de la partie arrière 7 et la paroi intérieure 31. Ainsi, la partie arrière 7 permet de maintenir I étanchéité du connecteur complémentaire 1 au niveau de la face arrière 15, en agissant à la fois sur les pourtours intérieur et extérieur du contact optique.

Dans un deuxième mode de réalisation, le support d'accrochage 6 présente sur son pourtour extérieur un pas de vis pour venir coopérer par rotation avec un pas de vis complémentaire présenté sur la paroi intérieure 31 du canal 14.

Le support d'accrochage 6 est solidaire de la partie arrière 7 . Dans un premier exemple, le support d'accrochage 6 comporte une extrémité arrière 47 en forme de harpon 48 pour coopérer avec une paroi intérieure 49 d'une cavité 50 de la partie arrière 7. Dans un deuxième exemple, le joint intérieur 45 est disposé de telle sorte qu'il est contraint entre le câble 3 et des parois intérieures du support d'accrochage 6, ces parois étant elles mêmes contraintes, sous l'effet du joint intérieur 45, contre les parois intérieures 49 de la cavité 50 de la partie arrière 7.

Le connecteur complémentaire 12 peut comporter de plus des moyens de réalignement 51. Un moyen de réalignement 51 peut dépasser à I intérieur de la cavité de réception 18 ou bien être un réceptacle pour recevoir le dispositif d alignement complémentaire du connecteur complémentaire.

## Revendications

1. Contact (1) optique monté autour d'un câble optique (3), le contact optique comportant une férule (4) montée à une extrémité du câble, un manchon (5) retenant solidairement le câble et la férule, et un support d'accrochage (6) monté autour du câble et prévu pour coopérer avec un connecteur complémentaire (12) pour y retenir le contact optique dans un canal (14) du connecteur complémentaire, **caractérisé en ce** le support d'accrochage est montée sur une partie arrière (7) du contact et cette partie arrière coulisse le long du câble, le support d'accrochage pouvant être engagé par rotation dans une paroi intérieure (31) du canal.

2. Contact optique selon la revendication 1 **caractérisé en ce que** la partie arrière comporte un joint inteme (45) disposée entre le câble et une paroi intérieure de la partie arrière, et comporte un joint externe (46) autour de cette partie arrière, le joint externe pouvant coopérer avec la paroi intérieure du canal.

3. Contact optique selon I une des revendications 1 à 2 **caractérisé en ce que** le support d'accrochage comporte un décrochement (30) pour coopérer avec une rampe en renfoncement (29) de la paroi intérieure du canal, le support d'accrochage étant repoussé par un ressort (8) comprimé entre une collerette (44) du support d'accrochage et un chant (43) du manchon cylindrique.

4. Contact optique selon la revendication 3 **caractérisé que** la rampe (29) est en forme de J.

5. Contact optique selon I une des revendications 3 à 4 **caractérisé en ce que** le support d'accrochage comporte deux excroissances latérales pour coopérer respectivement avec deux renfoncements diamétralement opposés dans la paroi intérieure.

6. Contact optique selon I une des revendications 1 à 2 **caractérisé en ce que** le support d'accrochage présente un pas de vis pour coopérer avec un filetage complémentaire du connecteur complémentaire.

7. Contact optique selon I une des revendications 1 à 6 **caractérisé en ce que** la partie arrière du contact optique est souple et soutient mécaniquement une portion de la fibre optique sortant du canal au niveau d'une la face arrière du connecteur complémentaire.

8. Contact optique selon I une des revendications 1 à 7 **caractérisé en ce que** le manchon comporte une clavette (38) anti rotation pour coopérer avec un rail (40) de la paroi intérieure du canal.

9. Ensemble connecteur optique comportant un contact optique (1) monté autour d'un câble optique (3) et un connecteur complémentaire (12) pour recevoir le contact optique dans un canal (14) du connecteur, le contact optique est retenu dans le canal par coopération entre un décrochement (30) du contact avec un renfoncement (29) du canal, **caractérisé en ce que** le décrochement du contact optique est présenté sur une partie arrière (7) coulissante le long du câble, et **en ce que** le contact est engagé et retenu dans le canal par un mouvement de rotation de la partie arrière par rapport au connecteur complémentaire.
